# EUROPEAN PATENT SPECIFICATION

(11) **EP 2 792 509 B1**
(45) Date of publication and mention of the grant of the patent: **05.09.2018**
(21) Application number: 13163921.3
(22) Date of filing: 16.04.2013
(51) Int. Cl.: B60C 23/04

(54) **Tire pressure sensor device**
Reifendrucksensorvorrichtung
Dispositif de capteur de pression de pneumatique

(43) Date of publication of application: 22.10.2014
(73) Proprietor: CUB Elecparts Inc., Changhua County (TW)
(72) Inventor: Yu, San-Chuan,, Changhua County (TW); Wang, Tsan-Nung, Changhua County (TW); Tseng, Shih-Chieh, Changhua County (TW)
(74) Representative: Becker Kurig Straus

(56) References cited:
- JP-A- 2006 188 097
- US-A1- 2007 295 076

## Description

### BACKGROUND OF THE INVENTION

### 1. Field of the Invention

The present invention relates to tire pressure monitoring technology and more particularly, to a tire pressure sensor device, which facilitates installation.

### 2. Description of the Related Art

Because the air pressure of a vehicle tire s is of great concern to traffic safety, regular vehicles are commonly equipped with a tire pressure sensor device or monitoring system that provides real-time tire pressure information to the vehicle driver, avoiding traffic accidents.

A conventional tire pressure sensor device is known comprising a tire pressure sensor and an air valve. During installation, a screw bolt is mounted in a through portion of the tire pressure sensor, and then a tool is operated to drive the screw bolt into a screw hole in the air valve, fastening the tire pressure sensor and the air valve together. During fastening up the screw bolt, the user must hold the air valve with one hand to avoid rotation of the air valve with the screw bolt when the screw bolt is being driven into the screw hole in the air valve by the user's other hand by means of the tool. Thus, the assembly procedure of the aforesaid prior art tire pressure sensor device is complicated and takes much time. An improvement in this regard is necessary. A tire pressure sensor device according to the preamble of claim 1 is known from CN102259566.

### SUMMARY OF THE INVENTION

The present invention has been accomplished under the circumstances in view. It is the main object of the present invention to provide a tire pressure sensor device, which has a simple structure and facilitates mounting and dismounting. According to the present invention this object is accomplished by a tire pressure sensor device as set out in the appended claims. Thus, when the air valve is in the first angular position, the stop block is kept in accurate alignment with the through portion and can be moved with the rod body of the extension rod in and out of the through portion for allowing separation between the tire pressure sensor and the air valve. On the contrary, when the air valve is in the second angular position, the stop block is stopped at the coupling means in a staggered manner relative to the through portion and prohibited from being moved through the through portion, and thus, the air valve and the tire pressure sensor are positively secured together at this time.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an elevational view of a tire pressure sensor device in accordance with the present invention.
FIG. 2 is an exploded view of the tire pressure sensor device in accordance with the present invention.
FIG. 3 is a top view of the present invention, illustrating the air valve of the tire pressure sensor device in the first angular position.
FIG. 4 is a front view of a part of the present invention, illustrating the stop block of the air valve of the tire pressure sensor device passed through the through portion of the mounting block.
FIG. 5 is similar to FIG. 3, illustrating the air valve in the second angular position.
FIG. 6 is similar to FIG. 4, illustrating the stop block of the air valve stopped from movement through the through portion of the mounting block.
FIG. 7 is a front view of the present invention, illustrating the position of the adjustment nut of the adjustment device adjusted.

### DETAILED DESCRIPTION OF THE INVENTION

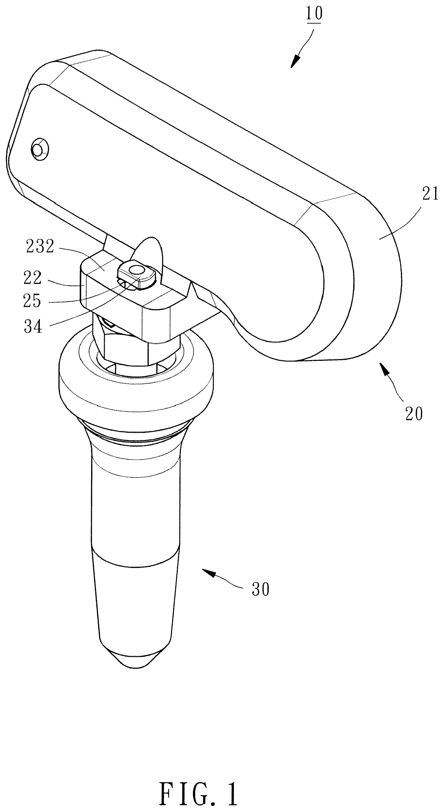

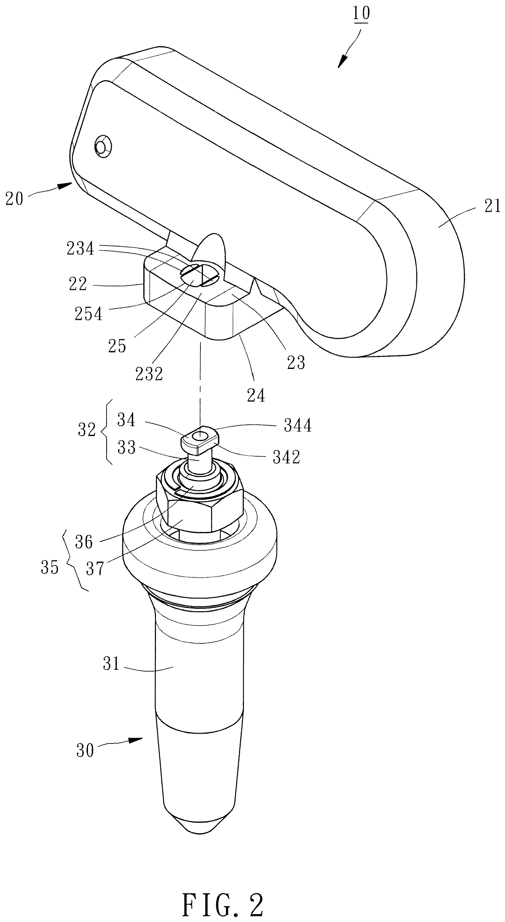

Referring to FIGS. 1 and 2, a tire pressure sensor device in accordance with the present invention is shown. The tire pressure sensor device **10** comprises a tire pressure sensor **20** and an air valve **30.**

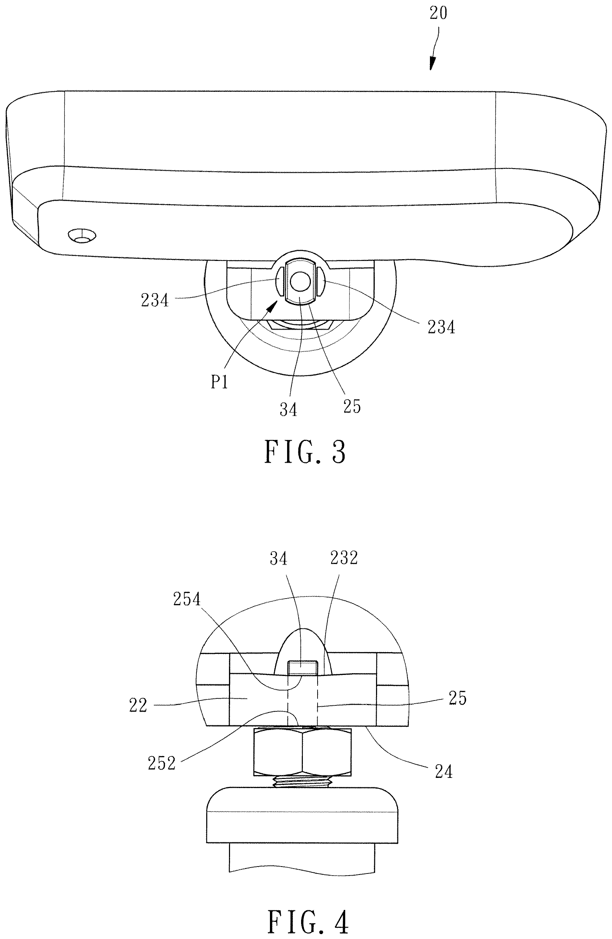

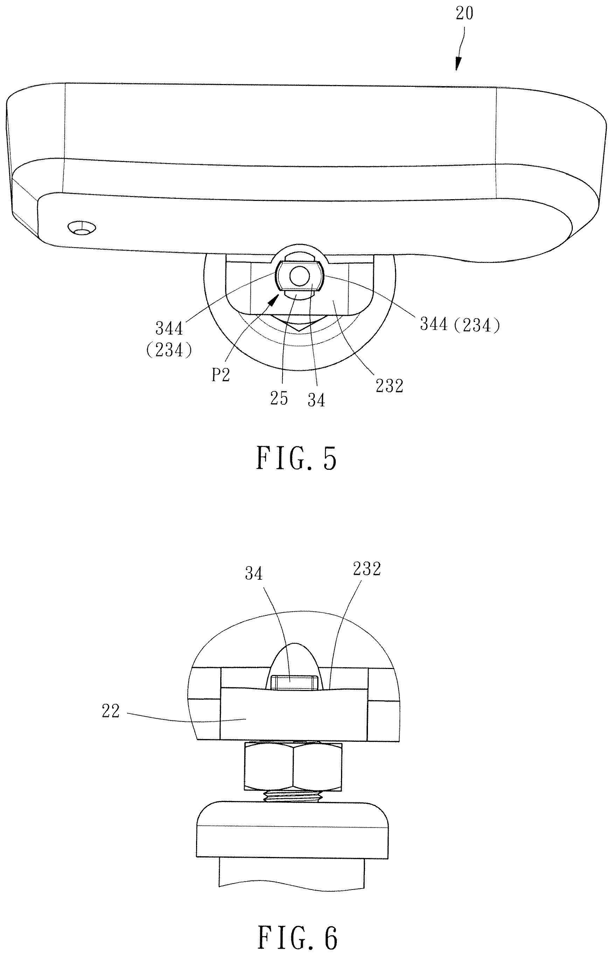

The tire pressure sensor **20** comprises a housing **21,** a sensor component (not shown) accommodated in the housing **21** for sensing the pressure of a tire, and a mounting block **22** formed integral with a part of the housing **21.** The mounting block **22** defines a first lateral side **23,** a second lateral side **24** opposite to the first lateral side **23,** and a through portion **25** between the first lateral side **23** and the second lateral side **24.** Further, the first lateral side **23** defines thereon a coupling means that can be a recessed portion, protruding portion, or any other configuration located on the first lateral side **23.** In this embodiment, the coupling means is a recessed portion **232** having a V-shaped cross section (see FIGS. 4 and 6). The through portion **25** has its one end terminating in an inlet **252** at the second lateral side **24** (see FIG. 4), and its other end terminating in an outlet **254** at the center of the recessed portion **232** (see FIGS. 2 and 4). The mounting block **22** further defines two retaining grooves **234** that are respectively located in the recessed portion **232** at the first lateral side **23** at two opposite lateral sides of the outlet **254** of the through portion **25,** as shown in FIGS. 2 and 3.

The air valve **30** comprises a valve body **31** and an extension rod **32.** The extension rod **32** comprises a rod body **33** and a stop block **34.** The rod body **33** extends out of the valve body **31** having the terminal end thereof configured for the mounting of the stop block **34.** Further, the outer diameter of the rod body **33** is smaller than the diameter of the through portion **25** so that, by means of the rod body **33,** the air valve **30** can be rotated relative to the tire pressure sensor **20** between a first angular position **P1** (as shown in FIG. 3) and a second angular position **P2** (see FIG. 5). Further, the stop block **34** is a non-circular block member configured to fit the non-circular cross section of the through portion **25,** comprising two opposite planar side faces **342** and two opposite arched end faces **344.** Each planar side face **243** is connected between the two arched end faces **344.** Thus, when the air valve **30** is in the first angular position **PI,** the stop block **34** and the through portion **25** are kept in accurate alignment, allowing movement of the stop block **34** in and out of the through portion **25,** as shown in FIGS. 3 and 4. On the contrary, when the air valve **30** is in the second angular position **P2,** the stop block **34** and the through portion **25** are vertically staggered, prohibiting the stop block **34** from being moved through the through portion **25,** as shown in FIGS. 5 and 6.

During installation, rotate the air valve **30** to the first angular position **P1** to keep the stop block **34** and the through portion **25** in accurate alignment, as shown in FIG. 3, allowing movement of the stop block **34** in and out of the through portion **25.** Thereafter, insert the extension rod **32** of the air valve **30** from the inlet **252** into the through portion **25** to the extend where the stop block **34** is exposed out of the outlet **254** of the through portion **25,** as shown in FIGS. 3 and 4, and then rotate the air valve **30** to the second angular position **P2** where the stop block **34** and the through portion **25** are vertically staggered, and the stop block **34** is prohibited from being moved through the through portion **25,** as shown in FIGS. 5 and 6. At this time, the stop block **34** is abutted at the recessed portion **232** of the mounting block **22** with the arched end faces **344** respectively positioned in the retaining grooves **234** in the recessed portion **232** of the mounting block **22,** and thus, the tire pressure sensor **20** and the air valve **30** are assembled.

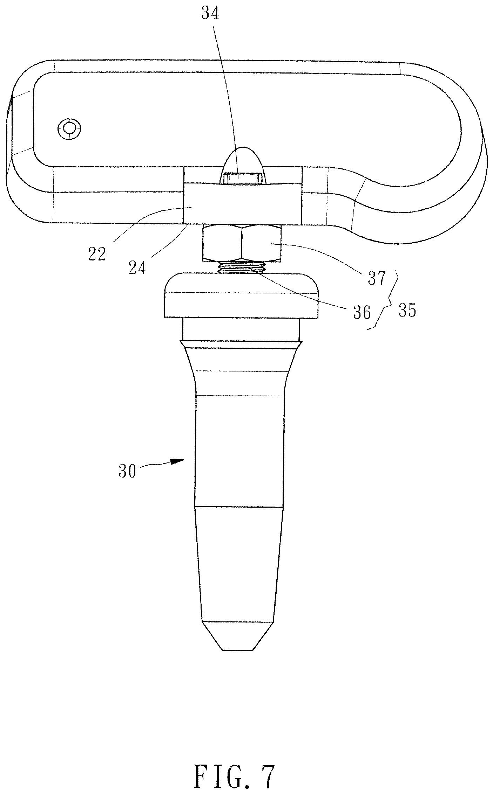

On the other hand, as shown in FIG. 7, the air valve **30** further comprises a adjustment device **35.** The adjustment device **35** comprises a screw tube **36** and an adjustment nut **37.** The screw tube **36** is sleeved onto the rod body **33** of extension rod **32** and fixedly connected thereto. The adjustment nut **37** is threaded onto the screw tube **36.** Thus, the adjustment nut **37** can be rotated relative to the screw tube **36** to move along the axial direction of the screw tube **36** and to further push the second lateral side **24** of the mounting block **22** of the housing **21,** enhancing the connection stability between the mounting block **22** of the tire pressure sensor **20** and the stop block **34** of the air valve **30.**

In conclusion, subject to the matching design between the through portion **25** of the tire pressure sensor **20** and the stop block **34** of the air valve **30,** the tire pressure sensor device **10** has the benefits of simple structure and ease of use. During operation, the user can achieve dismounting between the tire pressure sensor **20** and the air valve **30** simply by means of rotating the air valve **30.** This dismounting method is faster and convenient when compared to the conventional bolted mounting technique.

Although a particular embodiment of the invention has been described in detail for purposes of illustration, various modifications and enhancements may be made without departing from the scope of the invention. Accordingly, the invention is not to be limited except as by the appended claims.

## Claims

1. A tire pressure sensor device (10), comprising:
a tire pressure sensor (20) comprising a housing (21), said housing comprising a mounting block (22), said mounting block comprising a first lateral side (23), a second lateral (24) side opposite to said first lateral side (23) and a through portion (25) disposed between said first lateral side (23) and said second lateral side (24), said first lateral side (23) comprising coupling means, said through portion (25) comprising an inlet (252) disposed at one end thereof and located in said second lateral side (24) and an outlet (254) disposed at an opposite end thereof and located in said coupling means; and
an air valve (30) comprising an extension rod (32), said extension rod comprising a rod body (33) and a stop block (34), said rod body (33) having an outer diameter smaller than the diameter of said through portion (25), said rod body (33) being inserted through said inlet (252) and said outlet (254) of said through portion (25) for allowing said air valve (30) to be rotated relative to said tire pressure sensor (10) between said an angular position and a second angular position, said stop block (34) being fixedly located at one end of said rod body (33) outside said outlet (254) of said through portion (25), said stop block (34) being kept in accurate alignment with said through portion (25) for allowing movement of said stop block (34) in and out of said through portion through said outlet when said air valve (30) is in said first angular position, said stop block (34) being kept in a staggered manner relative to said through portion (25) and prohibited from being moved through said outlet (254) of said through portion (25) when said air valve (30) is in said second angular position;
**characterized in that**
said coupling means of said first lateral side of said mounting block (22) is a recessed portion (232) inwardly curved in said first lateral side (23), said recessed portion (232) comprises two retaining grooves (234) disposed at two opposite sides relative to said outlet (254) of said through portion (25), and said stop block (34) has two opposite ends;
and said stop block (34) is abutted at the recessed portion (232) of said mounting block (22) with said two opposite ends positioned respectively in said two retaining grooves (234) when said air valve (30) is in said second angular position.

2. The tire pressure sensor device as claimed in claim 1, wherein said stop block (34) of said air valve (30) comprises two opposite planer side faces (342) and two opposite arched end faces (344), each said planar side face (342) being connected between said arched end faces (344).

3. The tire pressure sensor device as claimed in claim 1, wherein said recessed portion (232) of said mounting block (22) has a V-shaped cross section; said outlet of said through portion (25) is disposed at the center of said coupling means.

4. The tire pressure sensor device as claimed in claim 1, wherein said air valve (30) further comprises an adjustment device (35), said adjustment device (35) comprises a screw tube (36) and an adjustment nut (37), said screw tube (36) being sleeved onto said rod body (33) of said extension rod (32) and fixedly connected thereto, said adjustment nut (37) being threaded onto said screw tube (36) and movable in an axial direction relative to said screw tube (36) to stop against said second lateral side (24) of said mounting block (22) of said housing.

## Patentansprüche

1. Reifendrucksensorvorrichtung (10), umfassend:
einen Reifendrucksensor (20) umfassend ein Gehäuse (21), wobei das Gehäuse (21) einen Befestigungsblock (22) umfasst, wobei der Befestigungsblock (22) eine erste laterale Seite (23), eine zweite laterale Seite (24) gegenüber der ersten lateralen Seite (23) und einen Durchgangsbereich (25) umfasst, der zwischen der ersten lateralen Seite (23) und der zweiten lateralen Seite (24) angeordnet ist, wobei die erste laterale Seite (23) Kopplungsmittel umfasst, wobei der Durchgangsbereich (25) einen Einlass (252) umfasst, der an einem Ende davon angeordnet ist und sich in der zweiten lateralen Seite (24) befindet, sowie einen Auslass (254), der an einem gegenständigen Ende davon angeordnet ist und sich in den Kopplungsmitteln befindet; und
ein Luftventil (30) umfassend einen Erstreckungsstab (32), wobei der Erstreckungsstab (32) einen Stabkörper (33) und einen Stoppblock (34) umfasst, wobei der Stabkörper (33) einen Außendurchmesser aufweist, der kleiner als der Durchmesser des Durchgangsbereichs (25) ist, wobei der Stabkörper (33) in dem Einlass (252) und dem Auslass (254) des Durchgangsbereichs (25) eingefügt vorliegt, um es dem Luftventil (30) zu ermöglichen, relativ zu dem Reifendrucksensor (20) zwischen einer ersten Winkellage und einer zweiten Winkellage gedreht zu werden, wobei der Stoppblock (34) sich fest an einem Ende des Stabkörpers (339 außerhalb des Auslasses (254) des Durchgangsbereichs (25) befindet, wobei der Stoppblock (34) genau an dem Durchgangsbereich (25) ausgerichtet ist, um eine Bewegung des Stoppblocks (34) in den Durchgangsbereich (25) hinein und aus diesem heraus durch den Auslass zu ermöglichen, wenn sich das Luftventil (30) in der ersten Winkellage befindet, wobei der Stoppblock (34) relativ zu dem Durchgangsbereich (25) verschoben ist und daran gehindert wird, in den Auslas (254) des Durchgangsbereichs (25) bewegt zu werden, wenn sich das Luftventil (30) in der zweiten Winkellage befindet;
**dadurch gekennzeichnet, dass**
das Kopplungsmittel der ersten lateralen Seite des Befestigungsblocks (22) ein zurückgesetzter Bereich (232) ist, der in der ersten lateralen Seite (23) nach innen gekrümmt ist, wobei der zurückgesetzte Bereich (232) zwei Rückhalterillen (234) umfasst, die an zwei gegenständigen Seiten relativ zu dem Auslass (254) des Durchgangsbereichs (25) angeordnet sind, und wobei der Stoppblock (34) zwei gegenständige Enden aufweist;
und dass der Stoppblock (34) gegen den zurückgesetzten Bereich (232) des Befestigungsblocks (22) stößt und die zwei gegenständigen Enden entsprechend in den zwei Rückhalterillen (234) angeordnet sind, wenn sich das Luftventil (30) in der zweiten Winkellage befindet.

2. Reifendrucksensorvorrichtung nach Anspruch 1, wobei der Stoppblock (34) des Luftventils (30) zwei gegenständige plane Seitenflächen (342) an zwei gegenständigen gewölbten Endflächen (344) umfasst, wobei jede plane Seitenfläche (342) zwischen den gewölbten Endflächen (344) verbunden vorliegt.

3. Reifendrucksensorvorrichtung nach Anspruch 1, wobei der zurückgesetzte Bereich (232) des Befestigungsblocks (22) einen V-förmigen Querschnitt aufweist; und wobei der Auslass des Durchgangsbereichs (25) in der Mitte der Kopplungsmittel angeordnet ist.

4. Reifendrucksensorvorrichtung nach Anspruch 1, wobei das Luftventil (30) ferner eine Einstellvorrichtung (35) umfasst, wobei die Einstellvorrichtung (35) ein Gewinderohr (36) und eine Einstellmutter (37) umfasst, wobei das Gewinderohr (36) auf den Stabkörper (33) des Erstreckungsstabs (32) aufgeschoben und fest damit verbunden ist, wobei die Einstellmutter (37) auf das Gewinderohr (36) aufgeschraubt ist und in einer axialen Richtung relativ zu dem Gewinderohr (36) bewegt werden kann, um gegen die zweite laterale Seite (24) des Befestigungsblocks (22) des Gehäuses zu stoppen.

## Revendications

1. Dispositif de capteur de pression de pneumatique (10) comprenant :
un capteur de pression de pneumatique (20) comprenant un boitier (21), ledit boitier comprenant un bloc de montage (22), ledit bloc de montage comprenant un premier côté latéral (23), un deuxième côté latéral (24) opposé audit premier côté latéral (23) et une partie traversante (25) disposée entre ledit premier côté latéral (23) et ledit deuxième côté latéral (24), ledit premier côté latéral (23) comprenant des moyens de couplage, ladite partie traversante (25) comprenant une entrée (252) disposée à une extrémité de celle-ci et située dans ledit deuxième côté latéral (24) et une sortie (254) disposée à une extrémité opposée de celle-ci et située dans ledit moyen de couplage; et
une soupape d'air (30) comprenant une tige d'extension (32), ladite tige d'extension comprenant un corps de tige (33) et un bloc de butée (34), ledit corps de tige (33) ayant un diamètre extérieur plus petit que le diamètre de ladite partie traversante (25), ledit corps de tige (33) étant inséré à travers ladite entrée (252) et ladite sortie (254) de ladite partie traversante (25) pour permettre à ladite soupape d'air (30) d'être mise en rotation par rapport audit capteur de pression de pneumatique (10) entre une position angulaire et une deuxième position angulaire, ledit bloc de butée (34) étant situé de manière fixe à une extrémité dudit corps de tige (33) à l'extérieur de ladite sortie (254) de ladite partie traversante (25), ledit bloc de butée (34) étant maintenu en alignement précis avec ladite partie traversante (25) pour permettre un mouvement dudit bloc de butée (34) dans et hors de ladite partie traversante à travers ladite sortie lorsque ladite soupape d'air (30) est dans ladite première angulaire position, ledit bloc de butée (34) étant maintenue d'une manière décalée par rapport à ladite partie traversante (25) et empêchant le déplacement à travers ladite sortie (254) de ladite partie traversante (25) lorsque ladite soupape d'air (30) est dans ladite seconde position angulaire ;
**caractérisé en ce que**
lesdits moyens de couplage dudit premier côté latéral dudit bloc de montage (22) est une partie encastrée (232) incurvée vers l'intérieur dans ledit premier côté latéral (23), ladite partie encastrée (232) comprend deux rainures de retenue (234) disposées à deux côtés opposés par rapport à ladite sortie (254) de ladite partie traversante (25), et ledit bloc de butée (34) possède deux extrémités opposées :
et ledit bloc de butée (34) est adossée à la partie encastrée (232) dudit bloc de montage (22) avec lesdites deux extrémités opposées positionnées respectivement dans lesdites deux rainures de retenue (234) lorsque ladite soupape d'air (30) est dans ladite deuxième position angulaire.

2. Dispositif de capteur de pression de pneumatique selon la revendication 1, dans lequel ledit bloc de butée (34) de ladite soupape d'air (30) comprend deux faces latérales opposées de la raboteuse (342) et deux faces opposées d'extrémité arquées (344), chaque face latérale de la raboteuse (342) étant connectée entre lesdites faces d'extrémité arquées (344).

3. Dispositif de capteur de pression de pneumatique selon la revendication 1, dans lequel ladite partie encastrée (232) dudit bloc de montage (22) présente une section transversale en forme de V ; ladite sortie de ladite partie traversante (25) est disposée au centre dudit moyen de couplage.

4. Dispositif de capteur de pression de pneumatique selon la revendication 1, dans lequel ladite soupape d'air (30) comprend en outre un dispositif de réglage (35), ledit dispositif de réglage (35) comprend un tube à vis (36) et un écrou de réglage (37), ledit tube à vis (36) étant emmanché sur ledit corps de tige (33) de ladite tige d'extension (32) et relié de manière fixe à celui-ci, ledit écrou de réglage (37) étant vissé sur ledit tube à vis (36) et étant mobile dans une direction axiale par rapport audit tube à vis (36) pour s'arrêter contre ladite deuxième face latérale (24) dudit bloc de montage (22) dudit boîtier.
